# EUROPÄISCHE PATENTSCHRIFT

(11) **EP 0 685 483 B1**
(45) Veröffentlichungstag und Bekanntmachung des Hinweises auf die Patenterteilung: **07.05.1997**
(21) Anmeldenummer: 95108426.8
(22) Anmeldetag: 01.06.1995
(51) Int. Cl.: C07F 7/12

(54) **Verfahren zur Herstellung von Alkyl- oder Aryldichlorsilanen**
Process for the preparation of alkyl- or aryldichlorosilanes
Procédé de préparation d'alkyl ou aryldichlorosilanes

(30) Priorität: 01.06.1994 DE 4419270
(43) Veröffentlichungstag der Anmeldung: 06.12.1995
(73) Patentinhaber: Wacker-Chemie GmbH, 81737 München (DE)
(72) Erfinder: Geisberger, Gilbert, Dr., D-84503 Altötting (DE)
(74) Vertreter: Deffner-Lehner, Maria

(56) Entgegenhaltungen:
- EP-A- 0 138 670
- EP-A- 0 206 621
- EP-A- 0 286 074
- EP-A- 0 560 363
- EP-A- 0 600 479
- FR-A- 1 457 139
- US-A- 4 410 669
- US-A- 4 613 491
- CHEMICAL ABSTRACTS, vol. 107, no. 8, 24. August 1987, Columbus, Ohio, US; abstract no. 61394f, PORSCH, B. ET AL. 'INORGANIC MATERIALS MODIFIED BY 3-(TRIMETHYLAMMONIO)PROPYLSILYL GROUP' Seite 135 ; & CS-A-234 939 (PORSCH, B. ET AL.)

## Beschreibung

Die Erfindung betrifft ein Verfahren zur Herstellung von Alkyl- oder Aryldichlorsilanen durch Komproportionierung von Alkyl- oder Aryltrichlorsilanen mit mindestens einem Silan mit Si-gebundenen Methylgruppen, Wasserstoff- und/oder Chloratomen in Gegenwart eines Katalysators sowie einen Katalysator.

US 3,399,222 beschreibt die Reaktion 2 RSiCl₃ + MeSiH₃ --> 2 RSiHCl₂ + MeSiHCl₂. Diese Reaktion wird jedoch in Gegenwart der homogenen Katalysatoren R₄NCl oder R₄PCl durchgeführt.

US 3,769,310 beschreibt ein Verfahren, bei dem unter anderem auch die Herstellung von Alkyl- oder Aryldichlorsilanen erwähnt ist. Die Reaktionen werden jedoch homogen durch, z.B. AlCl₃, KAlCl₄, katalysiert.

EP 147834 beschreibt ein Verfahren, bei dem unter anderem auch die Herstellung von Alkyl- oder Aryldichlorsilanen erwähnt ist. Die Reaktion wird in Gegenwart von kristallinem Al₂O₃ katalysiert.

DE 4208152 beschreibt einen Katalysator mit einer quarternären Ammoniumgruppe, der dort zur Katalyse der H-Übertragung auf Dimethyldichlorsilan verwendet wird.

Nachteilig am Stand der Technik ist, daß homogene Katalysatoren verwendet werden, die durch einen zusätzlichen Verfahrensschritt wieder zurückgewonnen werden müssen und/oder daß die Verfahren das Produkt nur in geringer Ausbeute liefern.

Es ist Aufgabe der vorliegenden Erfindung, ein verbessertes Verfahren zur Herstellung von Alkyl- und Aryldichlorsilanen sowie einen Katalysator mit gegenüber dem Stand der Technik verbesserten Eigenschaften zur Verfügung zu stellen.

Diese Aufgabe wird durch die Erfindung gelöst.

Gegenstand der Erfindung ist ein Verfahren zur Herstellung von Alkyl- oder Aryldichlorsilanen durch Komproportionierung von Alkyl- oder Aryltrichlorsilanen mit mindestens einem Silan mit Si-gebundenen Methylgruppen, Wasserstoff- und/oder Chloratomen in Gegenwart eines Katalysators, dadurch gekennzeichnet, daß als Silan Methylsilan und/oder Methylchlorsilan und als Katalysator enthaltend einen im Reaktionsmedium unlöslichen Träger, auf dem NR₂R¹-Gruppen oder ⁻X⁺NR₃R¹-Gruppen gebunden sind, wobei die ⁻X⁺NR₃R¹-Gruppen bevorzugt sind,
wobei R gleich oder verschieden ist, ein Wasserstoffatom oder einen einwertigen Kohlenwasserstoffrest mit 1 bis 20 Kohlenstoffatomen je Rest bedeutet oder zwei Reste R zusammen einen zweiwertigen Kohlenwasserstoffrest mit 4 bis 11 Kohlenstoffatomen, der gegebenenfalls durch ein Heteroatom unterbrochen ist, bedeuten,
R¹ einen zweiwertigen Kohlenwasserstoffrest mit 1 bis 20 Kohlenstoffatomen je Rest und X⁻ Chloridion, Bromidion oder Jodidion bedeutet, eingesetzt wird.

Das erfindungsgemäße Verfahren hat den Vorteil, daß bei der Komproportionierung ein Austausch von Si-gebundenen Chloratomen und Wasserstoffatomen, aber kein Austausch von Si-gebundenen Alkyl- oder Arylgruppen erfolgt, so daß keine nicht verwertbaren Nebenprodukte entstehen. Durch die heterogene Katalyse können die Reaktionsprodukte leicht vom Katalysator abgetrennt werden, wodurch eine kontinuierliche Verfahrensweise möglich ist.

Die Komproportionierung von Methylsilan und/oder Methylchlorsilan mit einem Alkyl- oder Aryltrichlorsilan findet in Gegenwart von einem im Reaktionsmedium unlöslichen Träger, auf dem NR₂R¹-Gruppen oder ⁻X⁺NR₃R¹-Gruppen gebunden sind, wobei R, R¹ und X⁻ die oben dafür angegebene Bedeutung haben, statt.

Beispiele für Alkyl- und Arylreste der Alkyl- und Aryltrichlorsilane sind Alkylreste, wie der Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Tetradecylreste; Hexadecylreste und Octadecylreste, wie der n-Octadecylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste; Xylylreste und Ethylphenylreste und Aralkylreste, wie der Benzylrest, der α- und β-Phenylethylrest; Halogenalkylreste, wie der Chlormethyl, 3-Chlorpropyl- und 3-Brompropylrest; Halogenarylreste, wie der o-, m-, p-Chlorphenyl- und Chlortolylrest.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4- Trimethylpentylrest; Nonylreste, wie der n-Nonylrest; Decylreste, wie der n-Decylrest; Dodecylreste, wie der n-Dodecylrest; Tetradecylreste; Hexadecylreste und Octadecylreste, wie der n-Octadecylrest; Cycloalkylreste, wie Cyclopentyl-, Cyclohexyl-, Cycloheptylreste und thylcyclohexylreste; Arylreste, wie der Phenylrest; Alkarylreste, wie o-, m-, p-Tolylreste; Xylylreste und Ethylphenylreste und Aralkylreste, wie der Benzylrest, der alpha- und beta-Phenylethylrest.

Beispiele für Reste, bei denen die beiden Reste R zusammen einen zweiwertigen Kohlenwasserstoffrest darstellen, sind solche der Formeln -(CH₂)₅- und -(CH₂)₄-.

Beispiele für Reste, bei denen die beiden Reste R zusammen einen zweiwertigen Kohlenwasserstoffrest, der durch ein Heteroatom unterbrochen ist, darstellen, sind solche der Formeln -(CH₂)₂-O-(CH₂)₂- und -(CH₂)₂-O-(CH₂)₂-O-(CH₂)₂-.

Bevorzugte Beispiele für R sind Alkylreste, wobei wegen der höheren katalytischen Aktivität der n-Butyl-, n-Pentyl-, n-Hexyl-, n-Heptyl-und der n-Octylrest besonders bevorzugt sind.

Beispiele für Reste R¹ sind Alkylenreste, wie der Methylen-, Ethylen-, n-Propylen-, iso-Propylen-, n-Butylen-, iso-Butylen-, n-Pentylen-, iso-Pentylenrest; Hexylenreste, wie der n-Hexylenrest; Heptylenreste, wie der n-Heptylenrest; Octylenreste, wie der n-Octylenrest und iso-Octylenreste; Nonylenreste, wie der n-Nonylenrest; Decylenreste, wie der n-Decylenrest; Dodecylenreste, wie der n-Dodecylenrest; Tetradecyclenreste; Hexadecylenreste und Octadecylenreste, wie der n-Octadecylenrest; Cycloalkylenreste, wie Cyclopentylen-, Cyclohexylen- und Cycloheptylenreste; Arylenreste, wie der Phenylenrest; Alkarylenreste, wie Tolylenreste und Aralkylenreste, wie der Benzylenrest.

Bevorzugte Beispiele für Reste R¹ sind Alkylenreste, wobei der n-Propylen-, n-Butylen-, n-Pentylenrest besonders bevorzugt ist.

Als Halogenidion X⁻ ist das Chloridion bevorzugt.

Bevorzugt im Reaktionsmedium unlösliche Träger sind saure Tone, wie Tonsil, Montmorillonit und sonstige Alumosilikate in der H⁺-Form, Zeolithe, poröses Glas, wie Controlled Pore Glass, poröse Keramik, wie Controlled Pore Ceramics, poröses Siliciumdioxid, wie gefällte oder pyrogene Kieselsäure, poröses Aluminiumoxid und poröses Mullit. Besonders bevorzugt ist offenporiges Sinterglas.

Weitere bevorzugte Beispiele für im Reaktionsmedium unlösliche Träger sind getrocknete Hydrolysate von funktionellen Silanen oder Polystyrole, wie mit Divinylbenzol vernetztes Polystyrol.

Die Bindung der NR₂R¹- oder ⁻X⁺NR₃R¹-Gruppen auf dem Träger erfolgt mit den hydrolysierbaren Gruppen Y der Verbindungen der Formel

Y₃₋ₓR² ₓSi(CH₂)ₙZ (I)

worin Y die hydrolysierbare Gruppe,
R² einen einwertigen Kohlenwasserstoffrest mit 1 bis 12 Kohlenstoffatomen je Rest,
n eine ganze Zahl von 1 bis 20, bevorzugt von 1-12, besonders bevorzugt von 1-8,
x 0 oder 1 bevorzugt 0 und
Z eine NR₂- oder ⁻X⁺NR₃-Gruppe bedeutet, wobei R die oben angegebene Bedeutung hat, bevorzugt ist R gleich oder verschieden und bedeutet einen einwertigen Kohlenwasserstoffrest mit 4 bis 8 Kohlenstoffatomen je Rest,
X⁻ die oben angegebene Bedeutung hat,
vorzugsweise in einem inerten Lösungsmittel, wie Toluol, Chlorbenzol oder einem Alkohol, bevorzugt Ethanol, bei Temperaturen im Bereich von vorzugsweise 0 bis 200 ^{°}C, besonders bevorzugt im Bereich von 50 bis 100^{°}C.

Beispiele für hydrolysierbare Gruppen Y sind Alkoxyreste, wie der Methoxy- Ethoxy-, Propoxy- und Butoxyrest, wobei der Ethoxyrest besonders bevorzugt ist und Halogenatome wie das Chloratom.

Beispiele für Reste R² sind Alkylreste, wie der Methyl-, Ethyl-, n-Propyl-, iso-Propyl-, n-Butyl-, iso-Butylrest; Arylreste, wie der Phenylrest; und Alkarylreste, wie o-, m-, p-Tolylreste.

Vorzugsweise wegen der leichten Zugänglichkeit sind als Rest R² der Methylrest und für n die Werte 2 oder 3, also der Ethylen- oder Propylenrest, bevorzugt.

Beispiele für bevorzugte Verbindungen der Formel

Y₃₋ₓR² ₓSi(CH₂)ₙZ (I)

sind 3-Aminopropyltrimethoxysilan, 3-Aminopropyltriethoxysilan, 2-Aminoethyltrimethoxysilan, 2-Aminoethyltriethoxysilan und 3-Aminopropyltrichlorsilan.

Vorzugsweise finden N,N-Diethylaminopropyltrimethoxysilan, Morpholinopropyltriethoxysilan, Trimethoxysilyl-3-propyl-N,N,N-dimethyloctylammoniumchlorid, Trimethoxysilyl-3-propyl-N,N,N-dimethyloctadecylammoniumchlorid, bevorzugt Triethoxysilyl-3-propyl-N,N,N-tri-pentylammoniumchlorid, Triethoxysilyl-3-propyl-N,N,N-tri-hexylammoniumchlorid, Triethoxysilyl-3-propyl-N,N,N-tri-heptylammoniumchlorid, Triethoxysilyl-3-propyl-N,N,N-tri-octylammoniumchlorid und besonders bevorzugt Triethoxysilyl-3-propyl-N,N,N-tri-butylammoniumchlorid Verwendung.

Vorzugsweise werden 5 - 40 Gew.-%, insbesondere 25 - 35 Gew.-%,Verbindungen der Formel (I), bezogen auf das Gewicht des unbehandelten Trägers, der als Pulver oder bevorzugt als bereits fertiger Formkörper in Form runder Platten, Rohre, Kugeln, Stäbe, Wabenkörpern und bevorzugt Raschig-Ringen, verwendet werden kann, eingesetzt.

Vorzugsweise wird eine 10 bis 60 %ige, bevorzugt eine 25 bis 35 %ige Lösung der Verbindung der Formel (I) in Alkohol, wie Methanol, bevorzugt Ethanol oder anderen inerten Lösungsmitteln wie Toluol, Xylol und Chlorbenzol bezogen auf das Gewicht der Verbindung der Formel (I), eingesetzt.

Die Bindung der NR₂R¹-Gruppen oder ⁻X⁺NR₃R¹-Gruppen auf dem Träger erfolgt während der Herstellung der Hydrolysate der Verbindung der Formel (I), die nach bekannten Verfahren herstellbar sind, in Gegenwart des Trägers, vergleiche K.G. Allum et al., Organometal. Chem. 87, 203 (1975).

Der bei der Reaktion so erhaltene Katalysator wird vorzugsweise bei einer Temperatur von 50 bis 100 °C getrocknet.

Eine weitere Möglichkeit besteht darin, die Verbindung der Formel (I) zunächst partiell zu hydrolysieren und erst in einem zweiten Schritt in Gegenwart des Trägers diese vollständig zu hydrolysieren und damit auf dem Träger zu binden.

Zur Modifizierung der Hydrolysate kann die Hydrolyse auch in Gegenwart von weiteren Verbindungen wie Wasserglas, Titanhalogeniden oder Titanalkoholaten, Zirkonhalogeniden oder Zirkonalkoholaten, Aluminiumhalogeniden oder miniumalkoholaten, Siliciumhalogeniden oder Siliciumalkoholaten und Zinnhalogeniden oder Zinnalkoholaten durchgeführt werden, wobei Tetraalkoxysilane, wie Tetramethoxysilan, Tetraethoxysilan, Tetrapropoxysilan und Tetrabutoxysilan bevorzugt sind und das Tetraethoxysilan besonders bevorzugt ist.

Die Verbindungen zur Modifizierung der Hydrolysate werden bezogen auf die Verbindungen der Formel (I) bevorzugt in Mengen von 1:1 bis 5:1 Mol, besonders bevorzugt 3:1 Mol, eingesetzt.

Beispiele für die bei der Herstellung der Hydrolysate eingesetzten Verbindungen sind

Si(OEt)₄ und (EtO)₃SiCH₂CH₂CH₂NBu₃⁺Cl⁻;

Ti(OBu)₄ und (MeO)₃SiCH₂CH₂CH₂NMe₂C₁₈H₃₇⁺Cl⁻;

Na₂SiO₃ und (MeO)₃SiCH₂CH₂CH₂NMe₂C₁₀H₂₁⁺Cl⁻;

Al(O-i-Pr)₃ und (MeO)₃SiCH₂CH₂CH₂NMe₃⁺Cl⁻,

wobei Me einen Methylrest, Et einen Ethylrest, i-Pr einen iso-Propylrest und Bu einen n-Butylrest bedeutet.

Die Katalysatoren können mit gebundenen NR₂R¹-Gruppen oder ⁻X⁺NR₃R¹-Gruppen als Pulver mit einer mittleren Korngrößenverteilung von vorzugsweise 1 µm bis 1 mm, bevorzugt 0,5 bis 1 mm, vorliegen bzw. sind vor oder nach der Bindung der NR₂R¹- Gruppen oder ⁻X⁺NR₃R¹-Gruppen auf dem Träger in an sich bekannter Weise in Formkörper wie Ringe, Halbringe, Stäbchen, Kugeln, Würfel oder Sättel überführt worden. Bevorzugte Formkörper haben die Form von Ringen, Kugeln oder Würfeln.

Die Formkörper werden aus feinverteiltem Katalysator mit einer mittleren Korngrößenverteilung von 1 µm bis 1 mm geformt, gegebenenfalls unter Zugabe von organischen oder anorganischen Bindern oder unter vernetzender Hydrolyse. Die Formgebung kann mittels Verpressen bei erhöhter Temperatur oder mittels Sintern bei erhöhtem Druck, aber auch mittels eines Extruders und anschließendem Zerkleinern der Profile erfolgen.

Beispiele für organische oder anorganische Binder sind Epoxydharze, Wasserglas, organische Polymere, wie Polyethylen, Polypropylen, Polystyrol, Polyvinylchlorid, Polyacrylat und Polyamid.

Zur Erhöhung der Porosität der geformten Katalysatoren wird den Massen vor der Formgebung vorzugsweise eine wasserlösliche Substanz, wie Natriumchlorid oder Natriumsulfat zugesetzt, welche nach dem Formgebungsschritt herausgelöst wird und somit eine hochaktive Makroporosität ergibt.

Besonders bevorzugt wird als Träger poröses Siliciumdioxid, wobei ein Formkörper aus offenporigem Sinterglas (SIRAN^{R}, Schott Glaswerke, Mainz) besonders bevozugt ist, verwendet. Dieses offenporige Sinterglas hat vorzugsweise eine Oberfläche bis 0,4 m²/g, bevorzugt 0,4 m²/g, ein einstellbares Porenvolumen bis 70 %, einen Porendurchmesser von 1,6 µm bis 400 µm und enthält Silanolgruppen, an die z.B. Silane hydrolysestabil gebunden werden können. Dieser Formkörper kann in Form runder Platten, Rohre, Kugeln, Stäbe, Wabenkörpern und bevorzugt Raschig-Ringen verwendet werden. Die Größe des Formkörpers beträgt vorzugsweise 1/10 der Größe des Reaktionsgefäßes.

Bevorzugt werden die NR₂R¹- oder ⁻X⁺NR₃R¹-Gruppen an der Trägeroberfläche gebunden, indem die Formkörper mit Verbindungen der Formel I bevorzugt im Gemisch mit weiteren Verbindungen, wie Siliciumalkoholaten, in Alkohol, wie Ethanol, unter vernetzender Hydrolyse getränkt werden. Dabei werden vorzugsweise 5 - 40 Gew.-%, insbesondere 25 - 35 Gew.-%, Verbindungen der Formel (I), bezogen auf das Gewicht des unbehandelten Trägers, der als Pulver oder bevorzugt als bereits fertiger Formkörper in Form runder Platten, Rohre, Kugeln, Stäbe, Wabenkörpern und bevorzugt Raschig-Ringen, verwendet werden kann, eingesetzt. Vorzugsweise wird eine 10 bis 60 %ige, bevorzugt eine 25 bis 35 %ige Lösung der Verbindung der Formel (I) in Alkohol, wie Methanol, bevorzugt Ethanol oder anderen inerten Lösungsmitteln, wie Toluol, bezogen auf das Gewicht der Verbindung der Formel (I), eingesetzt.

Die Verbindung der Formel (I) wird bevorzugt mit einer Verbindung zur Modifizierung der Hydrolysate, wie Siliciumalkoholaten in Mengen von 1 : 1 bis 1 : 5 Mol, bevorzugt 1 : 3 Mol, eingesetzt. Die anschließende vernetzende Hydrolyse wird durch Zugabe von verdünnter Salzsäure und Steigerung der Reaktionstemperatur bis maximal 100°C, wobei das Lösungsmittel abdestilliert und der Katalysator als Rückstand verbleibt, erreicht. Zur vollständigen Trocknung wird der Katalysator bis 90°C mit Luft gespült.

Ein weiterer Gegenstand der Erfindung ist ein Katalysator für das erfindungsgemäße Verfahren enthaltend einen Träger an den
⁻ X⁺NR₃R¹-Gruppen gebunden sind,
wobei R gleich oder verschieden ist und einen einwertigen Kohlenwasserstoffrest mit 4 bis 8 Kohlenstoffatomen je Rest bedeutet,
R¹ einen zweiwertigen Kohlenwasserstoffrest mit 1 bis 12 , bevorzugt 1-8 Kohlenstoffatomen je Rest und X⁻ Chloridion, Bromidion oder Jodidion bedeutet.

Bevorzugt ist die ⁻X⁺NR₃-Gruppe an dem Träger über eine hydrolysierbare Gruppe Y einer Verbindung der Formel

Y₃Si(CH₂)ₙZ (I),

worin Y eine hydrolysierbare Gruppe, ausgewält aus der Gruppe bestehend aus Methoxy-, Ethoxy-, Butoxyrest,
n eine ganze Zahl von 1 bis 12, bevorzugt 1-8
und
Z eine NR₂- oder bevorzugt ⁻X⁺NR₃-Gruppe bedeutet, wobei R gleich oder verschieden ist und einen einwertigen Kohlenwasserstoffrest mit 4 bis 8 Kohlenstoffatomen je Rest bedeutet,
X⁻ die oben angegebene Bedeutung hat, an den Träger gebunden.

Der erfindungsgemäße Katalysator hat vorzugsweise die Gestalt eines Formkörpers aus offenporigem Sinterglas und bevorzugt die 0,05- bis 0,2-fache Größe des Durchmessers des Reaktionsgefäßes.

Hergestellt wird der erfindungsgemäße Katalysator wie oben beschrieben.

Vorzugsweise wird das bei dem erfindungsgemäßen Verfahren eingesetzte Methylsilan und/oder Methylchlorsilan durch proportionierungsprodukte von Methyldichlorsilan in Gegenwart eines Katalysators hergestellt. Beispiele für Katalysatoren sind tertiäre Amine, quaternäre Ammoniumsalze, wie thyltrioctylammoniumchlorid, und solche Katalysatoren, bestehend aus einem im Reaktionsmedium unlöslichen Träger, auf dem tertiäre Amingruppen oder quaternäre Ammoniumgruppen kovalent gebunden sind, wie in US-A 4,870,200 (Wacker-Chemie GmbH) beschrieben. Besonders bevorzugt wird der erfindungsgemäße Katalysator verwendet.

Methylsilan und Methylchlorsilan können auch nach anderen Verfahren hergestellt werden.

Das bei dem erfindungsgemäßen Verfahren eingesetzte Methylsilan kann beispielsweise aus Methylhydrogensiloxanen nach dem in E.L.Zicky, J. Organometal. Chem. 4, 411-412 (1965), beschriebenen Verfahren oder durch Hydrierung von Methylchlorsilanen mit Metallhydriden gemäß W. Noll, Chemie und Technologie der Silicone, Verlag Chemie, Weinheim, 2. Auflage, Seiten 76 bis 77, 1968, hergestellt werden.

Die Silan-Edukte werden in gasförmiger oder flüssiger Form oder gelöst in einem inerten organischen Lösungsmittel, wie Hexan, Toluol, Xylol oder Chlorbenzol, eingesetzt.

Der feste Katalysator wird in feinverteilter Form in einem Fest- oder Wirbelbett oder vorzugsweise als Formkörper vorliegend in einem thermostatisierten Rohr eingesetzt.

Bei dem Katalysator handelt es sich um einen Katalysator enthaltend einen im Reaktionsmedium unlöslichen Träger, auf dem NR₂R¹-Gruppen oder ⁻X⁺NR₃R¹-Gruppen gebunden sind, wobei R gleich oder verschieden ist, ein Wasserstoffatom oder einen einwertigen Kohlenwasserstoffrest mit 1 bis 20 Kohlenstoffatomen je Rest bedeutet oder zwei Reste R zusammen einen zweiwertigen Kohlenwasserstoffrest mit 4 bis 11 Kohlenstoffatomen, der gegebenenfalls durch ein Heteroatom unterbrochen ist, bedeuten,
R¹ einen zweiwertigen Kohlenwasserstoffrest mit 1 bis 20 Kohlenstoffatomen je Rest und X⁻ Chloridion, Bromidion oder Jodidion bedeutet, wobei der erfindungsgemäße Katalysator bevorzugt ist.

Bei der Anordnung des Katalysators in einem Fest- oder Wirbelbett wird das Methylsilan und/oder Methylchlorsilan mit dem Alkyl- oder Aryltrichlorsilan bei einem Druck von vorzugsweise 0,1 bis 15 bar, bevorzugt 1 bis 5 bar, und einer Temperatur von vorzugsweise 0 bis 300 ^{°}C, bevorzugt 50 bis 120 ^{°}C, durch ein Fest- oder Wirbelbett, bestehend aus dem Katalysator, geleitet, das erhaltene Reaktionsgemisch kondensiert, durch fraktionierte Destillation aufgetrennt und so das Alkyl- oder Aryldichlorsilan erhalten.

Beispiele für Alkyl- und Arylreste der Alkyl- und Aryldichlorsilane sind Alkylreste, wie der Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Tetradecylreste; Hexadecylreste und Octadecylreste, wie der n-Octadecylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste; Xylylreste und Ethylphenylreste und Aralkylreste, wie der Benzylrest, der α- und β-Phenylethylrest; Halogenalkylreste, wie der Chlormethyl, 3-Chlorpropyl- und 3-Brompropylrest; Halogenarylreste, wie der o-, m-, p-Chlorphenyl- und Chlortolylrest.

Vorzugsweise wird dabei das in einer Rektifikationskolonne bei der Disproportionierung des Methyldichlorsilans anfallende Kopfprodukt Methylsilan, Methylchlorsilan oder ein Gemisch aus Methylsilan und Methylchlorsilan eingesetzt, wobei die Disproportionierung unter homogener oder heterogener Katalyse in Gegenwart von tertiären Aminen, quaternären Ammoniumsalzen und solchen Katalysatoren, die aus im Reaktionsmedium unlöslichen Trägern, auf dem tertiäre Amingruppen oder quaternäre Ammoniumgruppen kovalent gebunden sind (beispielsweise wie in US-A 4,870,200 Wacker-Chemie GmbH beschrieben), bestehen oder bevorzugt dem erfindungsgemäßen Katalysator, durchgeführt wird.

Bei der Anordnung des Katalysators als Formkörper in einem thermostatisierten Rohr wird Methylsilan und/oder Methylchlorsilan zusammen mit dem Alkyl- oder Aryltrichlorsilan bei einem Druck von vorzugsweise 0,1 bis 20 bar, bevorzugt 1 bis 3 bar und einer Temperatur von vorzugsweise 0 bis 250 °C, bevorzugt 50 bis 120 °C, durchgeleitet. Das erhaltene Reaktionsgemisch wird anschließend durch fraktionierte Destillation aufgetrennt.

Vorzugsweise wird dabei das in einer Rektifikationskolonne bei der Disproportionierung des Methyldichlorsilans anfallende Kopfprodukt Methylsilan, Methylchlorsilan oder ein Gemisch aus Methylsilan und Methylchlorsilan eingesetzt, wobei die Disproportionierung unter homogener oder heterogener Katalyse in Gegenwart von tertiären Aminen, quaternären Ammoniumsalzen und solchen Katalysatoren, die aus im Reaktionsmedium unlöslichen Trägern, auf dem tertiäre Amingruppen oder quaternäre Ammoniumgruppen kovalent gebunden sind (beispielsweise wie in US-A 4,870,200 Wacker-Chemie GmbH beschrieben), bestehen oder besonders bevorzugt mit dem dungsgemäßen Katalysator, durchgeführt wird.

Das erfindungsgemäße Verfahren kann absatzweise, halbkontinuierlich oder vollkontinuierlich durchgeführt werden. Vorzugsweise wird es vollkontinuierlich durchgeführt. Alkyl- und Aryldichlorsilane sind wertvolle Ausgangsverbindungen zur Herstellung von funktionellen Silanen oder Siloxanen über die Hydrosilylierung mit aliphatischen Doppel- oder Dreifachbindungen aufweisenden organischen Verbindungen.

Auch das als Nebenprodukt, hauptsächlich bei der Disproportionierung von Methyldichlorsilan, anfallende Methyltrichlorsilan kann auf wirtschaftliche Weise verwertet werden, beispielsweise zur Herstellung von durch Flammenhydrolyse erzeugter, hochdisperser Kieselsäure.

### Beispiele:

### Beispiel 1:

### Herstellung des Katalysators:

1020 g SIRAN^{R}-Raschig-Ringe (9 mm-Außendurchmesser, Schott Glaswerke, Mainz, BRD) wurden in einer Lösung aus 306 g Triethoxysilyl-3-propyl-N,N,N-tributylammoniumchlorid (hergestellt in einem Autoklaven, indem eine Mischung aus 215 g 3-Chloropropyltriethoxysilan und 185 g Tributylamin in 220 ml Ethanol 40 Stunden bei 130 ^{°}C/25 bar gehalten und anschließend im Vakuum alles Flüchtige entfernt wurde) und 265 g Tetraethoxysilan in 810 ml Ethanol in einem 10 l-Kolben am Rotationsverdampfer bei Raumtemperatur 30 min. bewegt.

Anschließend wurden 350 ml einer 7 %igen Salzsäure zugegeben, 45 min. bei Raumtemperatur gehalten und die Mischung innerhalb von 3 Stunden auf 93 ^{°}C erhitzt, wobei das Lösungsmittel abdestillierte. Zur vollständigen Trocknung der Ringe wurde 6 Stunden bei 90^{°}C mit Luft gespült.

### Beispiele 2 bis 6:

Der nach Beispiel 1 hergestellte Katalysator wurde in ein thermostatisiertes Rohr von 2,4 cm Durchmesser in einer Schütthöhe von 150 cm eingefüllt. Die durchgeleiteten Silan-Mengen und -Zusammensetzungen wurden variiert (Beispiele 2 - 6), die aus dem Reaktionsrohr austretenden Produkte kondensiert und ¹H-NMR-spektroskopisch analysiert. Die Versuchsbedingungen und Ergebnisse sind in der folgenden Tabelle zusammengefaßt.
Die verwendeten MeSiH₃/MeSiH₂Cl-Gemische wurden nach dem in US-A 4,870,200, Beispiel 3, beschriebenen Verfahren hergestellt.

**Tabelle**

| | Beispiele | | | | |
|---|---|---|---|---|---|
| | 2 R=Et | 3 R=n-Pr | 4 R=i-Bu | 5 R=Ph | 6 R=Et |
| Edukte (Mol-%) | | | | | |
| MeSiH₃ | 23,7 | 27,3 | 24,5 | 30,1 | 23,6 |
| MeSiH₂Cl | 2,0 | 9,3 | 4,3 | -- | 2,0 |
| RSiCl₃ | 74,3 | 63,4 | 71,2 | 69,9 | 74,4 |
| RSiCl₃-Menge | | | | | |
| (g/h) | 200 | 105 | 210 | 200 | 200 |
| Kat.-Temp. (^{o}C) | 75 | 100 | 100 | 70 | 75 |
| Druck Abs. (bar) | 1 | 1 | 1 | 1 | 1 |

| Produktzusammensetzung (Mol-%) | | | | | |
|---|---|---|---|---|---|
| MeSiH₃ | 0,2 | 0,9 | 0,5 | 0,4 | 1,5 |
| MeSiH₂Cl | 2,4 | 5,4 | 4,5 | 4,2 | 8,5 |
| MeSiHCl₂ | 16,3 | 24,2 | 16,4 | 21,2 | 12,0 |
| MeSiCl₃ | 6,8 | 6,0 | 7,5 | 4,3 | 3,6 |
| RSiH₃ | 0,5 | 1,5 | 0,4 | 1,3 | 0,2 |
| RSiH₂Cl | 4,9 | 8,6 | 8,1 | 10,4 | 3,5 |
| RSiHCl₂ | 42,1 | 40,8 | 38,1 | 38,0 | 33,8 |
| RSiCl₃ | 26,8 | 12,5 | 24,6 | 20,2 | 36,9 |

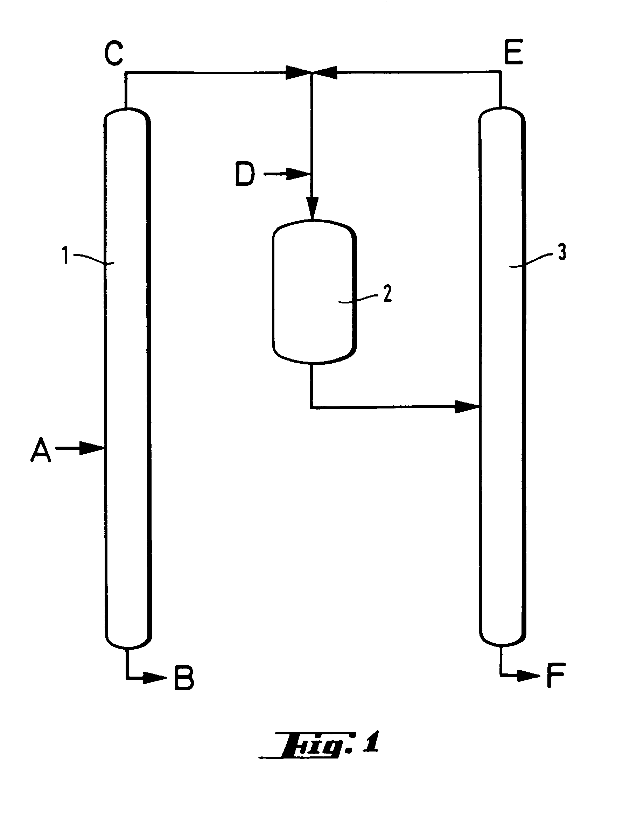

### Beispiel 7 (siehe Figur 1):

In einer Versuchsanlage 1 aus V4A-Stahl, welche in den wesentlichen Teilen aus einer regelbaren Dosierpumpe, einem Verdampfer, einer Füllkörperkolonne mit 2,5 m Gesamtlänge und 50 mm Innendurchmesser, einem Kolonnenkopf mit Kühler, einer Destillationsblase mit 5 l Inhalt sowie einer Vorrichtung zur Druckkonstanthaltung und Entleerung des Sumpfes besteht, werden aus einem Vorratsgefäß mittels einer Dosierpumpe 1000 g/h Methyldichlorsilan A, das in einem Verdampfer kontinuierlich verdampft wird, bei einem Absolutdruck von 7 bar in den unteren Kolonnenteil zugeführt.
Das in die mit Katalysator, dessen Herstellung in Beispiel 1 beschrieben ist, befüllte Kolonne 1 eintretende, auf 95 ^{°}C vorgeheizte Methyldichlorsilan disproportioniert, wobei sich das entstehende Reaktionsgemisch gleichzeitig auftrennt. Das gebildete höhersiedende Methyltrichlorsilan (404 g/h) und nicht umgesetztes Methyldichlorsilan (506 g/h) B sammelt sich im Sumpf, aus dem es in einen Vorratsbehälter ausgetragen wird. Die Leichtsieder gehen in der Kolonne unter weiterer Reaktion nach oben. Die Temperaturen in der Kolonne betragen im Sumpf 122 ^{°}C und am Kopf 2 ^{°}C. Das gebildete Dampfgemisch C wird am Kolonnenkopf abgezogen und zusammen mit 600 g/h n-Propyltrichlorsilan D bei 2bar (abs.) durch ein mit nach Beispiel 1 hergestellten Katalysator befülltes auf 100 ^{°}C thermostatisiertes Rohr 2 von 5 cm Durchmesser und 150 cm Länge geleitet; das Reaktionsprodukt wird mittels eines Kühlers vollständig kondensiert und bei Atmosphärendruck in der Mitte einer Rektifikationskolonne 3, welche von den Dimensionen her der ersten entspricht, jedoch mit V4A-Stahl-Interpak-10-Füllkörpern befüllt ist, eingeleitet. Die Leichtsieder Methylsilan, n-Propylsilan und Methylchlorsilan E werden am Kolonnenkopf abgenommen und dem Reaktor 2 zugeführt. Dem Sumpf der Kolonne 3 wird kontinuierlich 680 g/h eines Silan-Gemisches F folgender Zusammensetzung entnommen:
45,6 Gew.-% Propyldichlorsilan
19,8 Gew.-% Propyltrichlorsilan
7,2 Gew.-% Propylchlorsilan
18,6 Gew.-% Methyldichlorsilan
8,8 Gew.-% Methyltrichlorsilan
Zur Auftrennung der Silane wird das Gemisch destillativ aufgearbeitet.

## Patentansprüche

1. Verfahren zur Herstellung von Alkyl- oder Aryldichlorsilanen durch Komproportionierung von Alkyl- oder trichlorsilanen mit mindestens einem Silan mit Si-gebundenen Methylgruppen, Wasserstoff- und/oder Chloratomen in Gegenwart eines Katalysators, dadurch gekennzeichnet, daß als Silan Methylsilan und/oder Methylchlorsilan und als Katalysator ein Katalysator enthaltend einen im Reaktionsmedium unlöslichen Träger, auf dem NR₂R¹-Gruppen oder ⁻X⁺NR₃R¹-Gruppen gebunden sind,
wobei R gleich oder verschieden ist, ein Wasserstoffatom oder einen einwertigen Kohlenwasserstoffrest mit 1 bis 20 Kohlenstoffatomen je Rest bedeutet oder zwei Reste R zusammen einen zweiwertigen Kohlenwasserstoffrest mit 4 bis 11 Kohlenstoffatomen, der gegebenenfalls durch ein Heteroatom unterbrochen ist, bedeuten,
R¹ einen zweiwertigen Kohlenwasserstoffrest mit 1 bis 20 Kohlenstoffatomen je Rest und X⁻ Chloridion, Bromidion oder Jodidion bedeutet, eingesetzt wird.

2. Verfahren nach Anspruch 1, dadurch gekennzeichnet, daß als Katalysator ein Katalysator enthaltend einen heterogenen Träger an den ⁻X⁺NR₃R¹-Gruppen gebunden sind,
wobei R gleich oder verschieden ist und einen einwertigen Kohlenwasserstoffrest mit 4 bis 8 Kohlenstoffatomen je Rest bedeutet,
R¹ einen zweiwertigen Kohlenwasserstoffrest mit 1 bis 8 Kohlenstoffatomen je Rest und X⁻ Chloridion, Bromidion oder Jodidion bedeutet, verwendet wird.

3. Verfahren nach Anspruch 1 oder 2, dadurch gekennzeichnet, daß als Katalysator ein Katalysator enthaltend einen Träger, an den die hydrolysierbare Gruppe Y einer Verbindung der Formel
Y₃Si(CH₂)ₙZ (I),
worin Y eine hydrolysierbare Gruppe, ausgewählt aus der Gruppe bestehend aus Methoxy-, Ethoxy-, Butoxyrest,
n eine ganze Zahl von 1 bis 12,
und
Z eine ⁻X⁺NR₃-Gruppe bedeutet, wobei R gleich oder verschieden ist und einen einwertigen Kohlenwasserstoffrest mit 4 bis 8 Kohlenstoffatomen je Rest bedeutet,
und X⁻ Chloridion, Bromidion oder Jodidion bedeutet, bindet, verwendet wird.

4. Verfahren nach einem oder mehreren der Ansprüche 1 bis 3, dadurch gekennzeichnet, daß der Träger ein Formkörper ist und die 0,05- bis 0,2-fache Größe des Durchmessers des Reaktionsgefäßes hat.

5. Katalysator für das Verfahren nach den Ansprüchen 1-4, enthaltend einen Träger, an den ⁻X⁺NR₃R¹-Gruppen gebunden sind,
wobei R gleich oder verschieden ist und einen einwertigen Kohlenwasserstoffrest mit 4 bis 8 Kohlenstoffatomen je Rest bedeutet,
R¹ einen zweiwertigen Kohlenwasserstoffrest mit 1 bis 12 Kohlenstoffatomen je Rest und X⁻ Chloridion, Bromidion oder Jodidion bedeutet.

6. Katalysator nach Anspruch 5, dadurch gekennzeichnet, daß die ⁻X⁺NR₃-Gruppe an den Träger über eine hydrolysierbare Gruppe Y einer Verbindung der Formel
Y₃Si(CH₂)ₙZ (I)
worin Y eine hydrolysierbare Gruppe, ausgewählt aus der Gruppe bestehend aus Methoxy-, Ethoxy-, Butoxyrest,
n eine ganze Zahl von 1 bis 12,
und
Z eine ⁻X⁺NR₃-Gruppe bedeutet, wobei R gleich oder verschieden ist und einen einwertigen Kohlenwasserstoffrest mit 4 bis 8 Kohlenstoffatomen je Rest und X⁻ Chloridion, Bromidion oder Jodidion bedeutet, gebunden ist.

7. Katalysator nach Anspruch 5 oder 6, dadurch gekennzeichnet, daß der Träger ein Formkörper ist und die 0,05- bis 0,2-fache Größe des Durchmessers des Reaktionsgefäßes hat.

8. Verfahren zur Herstellung des Katalysators nach einem oder mehreren der Ansprüche 5 bis 7, dadurch gekennzeichnet, daß ein Träger mit einer Verbindung umgesetzt wird, die mindestens eine
⁻X⁺NR₃R¹-Gruppe aufweist,
wobei R gleich oder verschieden ist und einen einwertigen Kohlenwasserstoffrest mit 4 bis 8 Kohlenstoffatomen je Rest bedeutet,
R¹ einen zweiwertigen Kohlenwasserstoffrest mit 1 bis 12 Kohlenstoffatomen je Rest und X⁻ Chloridion, Bromidion oder Jodidion bedeutet.

9. Verfahren nach Anspruch 8 zur Herstellung des Katalysators nach einem oder mehreren der Ansprüche 5 bis 7, dadurch gekennzeichnet, daß ein Träger mit einer Verbindung der Formel
Y₃Si(CH₂)ₙZ (I)
worin Y eine hydrolysierbare Gruppe, ausgewählt aus der Gruppe bestehend aus Methoxy-, Ethoxy-, Butoxyrest,
n eine ganze Zahl von 1 bis 12,
Z eine ⁻X⁺NR₃-Gruppe bedeutet,
und
wobei R gleich oder verschieden ist und einen einwertigen Kohlenwasserstoffrest mit 4 bis 8 Kohlenstoffatomen je Rest und X⁻ Chloridion, Bromidion oder Jodidion bedeutet, umgesetzt wird.

10. Verfahren nach Anspruch 8 oder 9 zur Herstellung des Katalysators nach einem oder mehreren der Ansprüche 5 bis 7, dadurch gekennzeichnet, daß zusätzlich ein Tetraalkoxysilan eingesetzt wird.

11. Verfahren nach Anspruch 1, dadurch gekennzeichnet, daß als Methylchlorsilan und/oder Methylsilan die Disproportionierungsprodukte von Methyldichlorsilan eingesetzt werden, die durch Disproportionierung von Methyldichlorsilan in Gegenwart eines Katalysators nach einem oder mehreren der Ansprüche 5 bis 7 oder hergestellt nach einem oder mehreren der Ansprüche 8 bis 10 erhalten werden.

## Claims

1. Process for preparing alkyl- or aryldichloro-silanes by comproportionation of alkyl- or aryltrichlorosilanes with at least one silane containing Si-bonded methyl groups, hydrogen and/or chlorine atoms in the presence of a catalyst, characterized in that the silane used is methylsilane and/or methylchlorosilane and the catalyst used is a catalyst comprising a support insoluble in the reaction medium to which NR₂R¹- groups or ⁻X⁺NR₃R¹- groups are bonded,
where R is identical or different and is a hydrogen atom or a monovalent hydrocarbon radical having from 1 to 20 carbon atoms per radical or two radicals R together are a divalent hydrocarbon radical having from 4 to 11 carbon atoms which may, if desired, be interrupted by a hetero atom,
R¹ is a divalent hydrocarbon radical having from 1 to 20 carbon atoms per radical and X⁻ is a chloride ion, bromide ion or iodide ion.

2. Process according to Claim 1, characterized in that the catalyst used is a catalyst comprising a heterogeneous support to which ⁻X⁺NR₃R¹- groups are bonded,
where R is identical or different and is a monovalent hydrocarbon radical having from 4 to 8 carbon atoms per radical,
R¹ is a divalent hydrocarbon radical having from 1 to 8 carbon atoms per radical and X⁻ is a chloride ion, bromide ion or iodide ion.

3. Process according to Claim 1 or 2, characterized in that the catalyst used is a catalyst comprising a support to which the hydrolysable group Y of a compound of the formula
Y₃Si(CH₂)ₙZ (I),
where Y is a hydrolysable group selected from the group consisting of methoxy, ethoxy, butoxy radicals,
n is an integer from 1 to 12,
and
Z is a ⁻X⁺NR₃- group, where R is identical or different and is a monovalent hydrocarbon radical having from 4 to 8 carbon atoms per radical,
and X⁻ is a chloride ion, bromide ion or iodide ion, is bonded.

4. Process according to one or more of Claims 1 to 3, characterized in that the support is a shaped body and has from 0.05 to 0.2 times the size of the diameter of the reaction vessel.

5. Catalyst for the process according to Claims 1-4 comprising a support to which ⁻X⁺NR₃R¹- groups are bonded, where R is identical or different and is a monovalent hydrocarbon radical having from 4 to 8 carbon atoms per radical,
R¹ is a divalent hydrocarbon radical having from 1 to 12 carbon atoms per radical and X⁻ is a chloride ion, bromide ion or iodide ion.

6. Catalyst according to Claim 5, characterized in that the ⁻X⁺NR₃- group is bonded to the support via a hydrolysable group Y of a compound of the formula
Y₃Si(CH₂)ₙZ (I),
where Y is a hydrolysable group selected from the group consisting of methoxy, ethoxy, butoxy radicals,
n is an integer from 1 to 12,
and
Z is a ⁻X⁺NR₃- group, where R is identical or different and is a monovalent hydrocarbon radical having from 4 to 8 carbon atoms per radical and X⁻ is a chloride ion, bromide ion or iodide ion.

7. Catalyst according to Claim 5 or 6, characterized in that the support is a shaped body and has from 0.05 to 0.2 times the size of the diameter of the reaction vessel.

8. Process for preparing the catalyst according to one or more of Claims 5 to 7, characterized in that a support is reacted with a compound containing at least one
⁻X⁺NR₃R¹-group,
where R is identical or different and is a monovalent hydrocarbon radical having from 4 to 8 carbon atoms per radical,
R¹ is a divalent hydrocarbon radical having from 1 to 12 carbon atoms per radical and X⁻ is a chloride ion, bromide ion or iodide ion.

9. Process according to Claim 8 for preparing the catalyst according to one or more of Claims 5 to 7, characterized in that a support is reacted with a compound of the formula
Y₃Si(CH₂)ₙZ (I),
where Y is a hydrolysable group selected from the group consisting of methoxy, ethoxy, butoxy radicals,
n is an integer from 1 to 12,
and
Z is a ⁻X⁺NR₃- group,
where R is identical or different and is a monovalent hydrocarbon radical having from 4 to 8 carbon atoms per radical and X⁻ is a chloride ion, bromide ion or iodide ion.

10. Process according to Claim 8 or 9 for preparing the catalyst according to one or more of Claims 5 to 7, characterized in that a tetraalkoxysilane is additionally used.

11. Process according to Claim 1, characterized in that the methylchlorosilane and/or methylsilane used are/is the disproportionation products of methyldichlorosilane, which products are obtained by disproportionation of methyldichlorosilane in the presence of a catalyst according to one or more of Claims 5 to 7 or prepared according to one or more of Claims 8 to 10.

## Revendications

1. Procédé de préparation d'alkyl- ou d'aryldichlorosilanes par le comproportionnement d'alkyl- ou d'aryltrichlorosilanes avec au moins un silane contenant des groupes méthyle, des atomes d'hydrogène et/ou de chlore, liés à Si en présence d'un catalyseur, caractérisé en ce qu'on utilise en tant que silane le méthylsilane et/ou le méthylchlorosilane et en tant que catalyseur un catalyseur contenant un support insoluble dans le milieu réactionnel, auquel sont liés des groupes NR₂R¹ ou ⁻X⁺NR₃R¹,
dans lesquels R est identique ou différent et représente un atome d'hydrogène ou un radical hydrocarbure monovalent ayant 1 à 20 atomes de carbone par radical ou deux radicaux R représentent ensemble un radical hydrocarbure divalent ayant 4 à 11 atomes de carbone qui peut être éventuellement interrompu par un hétéroatome,
R¹ représente un radical hydrocarbure divalent ayant 1 à 20 atomes de carbone par radical et X⁻ représente un ion chlorure, un ion bromure ou un ion iodure.

2. Procédé selon la revendication 1, caractérisé en ce qu'on utilise en tant que catalyseur un catalyseur contenant un support hétérogène auquel sont liés des groupes ⁻X⁺NR₃R¹,
dans lesquels R est identique ou différent et représente un radical hydrocarbure monovalent ayant 4 à 8 atomes de carbone par radical,
R¹ représente un radical hydrocarbure divalent ayant 1 à 8 atomes de carbone par radical et X⁻ représente un ion chlorure, un ion bromure ou un ion iodure.

3. Procédé selon la revendication 1 au 2, caractérisé en ce qu'on utilise en tant que catalyseur un catalyseur contenant un support auquel est lié le groupe hydrolysable Y d'un composé de formule
Y₃Si(CH₂)ₙZ (I),
dans laquelle Y représente un groupe hydrolysable choisi parmi le groupe constitué des radicaux méthoxy, éthoxy, butoxy,
n représente un entier de 1 à 12,
et
Z représente un groupe ⁻X⁺NR₃, dans lequel R est identique ou différent et représente un radical hydrocarbure monovalent ayant 4 à 8 atomes de carbone par radical,
et X⁻ représente un ion chlorure, un ion bromure ou un ion iodure.

4. Procédé selon l'une ou plusieurs des revendications 1 à 3, caractérisé en ce que le support est un corps mis en forme et a une taille de 0,05 à 0,2 fois le diamètre du vase de réaction.

5. Catalyseur pour le procédé selon les revendications 1-4, contenant un support auquel des groupes ⁻X⁺NR₃R¹ sont liés,
dans lesquels R est identique ou différent et représente un radical hydrocarbure monovalent ayant 4 à 8 atomes de carbone par radical,
R¹ représente un radical hydrocarbure divalent ayant 1 à 12 atomes de carbone par radical et X⁻ représente un ion chlorure, un ion bromure ou un ion iodure.

6. Catalyseur selon la revendication 5, caractérisé en ce que le groupe ⁻X⁺NR₃ est lié au support par l'intermédiaire d'un groupe hydrolysable Y d'un composé de formule
Y₃Si(CH₂)ₙZ (I)
dans laquelle Y est un groupe hydrolysable choisi parmi le groupe constitué des radicaux méthoxy, éthoxy, butoxy, n représente un entier de 1 à 12,
et
Z représente un groupe ⁻X⁺NR₃, dans lequel R est identique ou différent et représente un radical hydrocarbure monovalent ayant 4 à 8 atomes de carbone par radical et X⁻ représente un ion chlorure, un ion bromure ou un ion iodure.

7. Catalyseur selon la revendication 5 ou 6, caractérisé en ce que le support est un corps mis en forme et a une taille de 0,05 à 0,2 fois le diamètre du vase de réaction.

8. Procédé de préparation du catalyseur selon l'une ou plusieurs des revendications 5 à 7, caractérisé en ce qu'un support est mis en réaction avec un composé possédant au moins un groupe ⁻X⁺NR₃R¹,
dans lequel R est identique ou différent et représente un radical hydrocarbure monovalent ayant 4 à 8 atomes de carbone par radical,
R¹ représente un radical hydrocarbure divalent ayant 1 à 12 atomes de carbone par radical et X⁻ représente un ion chlorure, un ion bromure ou un ion iodure.

9. Procédé selon la revendication 8 de préparation du catalyseur selon l'une ou plusieurs des revendications 5 à 7, caractérisé en ce qu'un support est mis en réaction avec un composé de formule
Y₃Si(CH₂)ₙZ (I)
dans laquelle Y est un groupe hydrolysable choisi parmi le groupe constitué des radicaux méthoxy, éthoxy, butoxy, n représente un entier de 1 à 12,
et
Z représente un groupe ⁻X⁺NR₃,
dans lequel R est identique ou différent et représente un radical hydrocarbure monovalent ayant 4 à 8 atomes de carbone par radical et X⁻ représente un ion chlorure, un ion bromure ou un ion iodure.

10. Procédé selon la revendication 8 ou 9 de préparation du catalyseur selon l'une ou plusieurs des revendications 5 à 7, caractérisé en ce qu'on utilise en outre un tétraalcoxysilane.

11. Procédé selon la revendication 1, caractérisé en ce qu'on utilise en tant que méthylchlorosilane et/ou méthylsilane les produits de disproportionnement du méthyldichlorosilane, qui sont obtenus par le disproportionnement du méthyldichlorosilane en présence d'un catalyseur selon l'une ou plusieurs des revendications 5 à 7 ou préparé selon l'une ou plusieurs des revendications 8 à 10.
